# FASCICULE DE BREVET EUROPEEN

(11) **EP 4 072 883 B1**
(45) Date de publication et mention de la délivrance du brevet: **13.08.2025**
(21) Numéro de dépôt: 20842258.4
(22) Date de dépôt: 07.12.2020
(51) Int. Cl.: B60K 11/04, B60K 11/08

(54) **MODULE DE REFROIDISSEMENT DE VÉHICULE AUTOMOBILE**
KÜHLMODUL FÜR EIN KRAFTFAHRZEUG
COOLING MODULE FOR A MOTOR VEHICLE

(30) Priorité: 13.12.2019 FR 1914376
(43) Date de publication de la demande: 19.10.2022
(73) Titulaire: VALEO SYSTEMES THERMIQUES, 78320 Le Mesnil Saint-Denis (FR)
(72) Inventeur: BIREAUD, Fabien, 78322 LE MESNIL SAINT-DENIS CEDEX (FR); TOURNOIS, Rémi, 78322 LE MESNIL SAINT-DENIS CEDEX (FR); TRINDADE, José, 78322 LE MESNIL SAINT-DENIS CEDEX (FR)
(74) Mandataire: Valeo Powertrain Systems
(86) Numéro de dépôt international: PCT/FR2020/052303
(87) Numéro de publication internationale: WO 2021/116576

(56) Documents cités:
- DE-A1- 102006 060 085
- FR-A1- 3 013 302
- FR-A1- 3 100 483
- US-A1- 2012 241 128
- US-A1- 2018 327 038

## Description

L'invention se rapporte au domaine des modules de refroidissement pour véhicules automobiles.

De tels modules de refroidissements peuvent notamment être placés en face avant d'un véhicule automobile, par exemple au niveau d'une calandre d'un tel véhicule et ils comprennent généralement un conduit d'entrée d'air, un ensemble d'échangeurs thermiques, un cadre de support de ces échangeurs, et une hélice motorisée dont le rôle est d'acheminer l'air de refroidissement (par exemple, de l'air capté directement à l'extérieur du véhicule par une calandre avant de celui-ci) vers les échangeurs thermiques du module de refroidissement. Les échangeurs thermiques sont empilés de manière à être logés et fixés dans un volume intérieur délimité par le cadre de support, c'est-à-dire, en d'autres termes, que ce cadre entoure les échangeurs qu'il supporte. En outre, le cadre de support comporte des moyens de maintien pour maintenir mécaniquement le conduit d'entrée d'air et l'hélice motorisée en regard des échangeurs thermiques de manière à guider l'air entrant dans le module de refroidissement à travers les échangeurs thermiques en garantissant qu'un maximum du flux d'air est acheminé, avec un minimum de pertes, vers ces derniers. Dans la pratique, les moyens de maintien sont liés au cadre de support pour limiter les coûts.

Un exemple de module de refroidissement de véhicule automobile est aussi fourni dans le document US2012/241128A1.

Le problème technique auquel l'invention se propose d'apporter une solution est celui des fuites d'air de refroidissement qui peuvent survenir, notamment, entre les bords du conduit d'entrée d'air et le cadre qui le maintien, tout en simplifiant la gestion de l'étanchéité entre les différentes pièces du module de refroidissement.

La présente invention propose un module de refroidissement de véhicule automobile, comprenant au moins un premier échangeur thermique et au moins un conduit comportant une entrée d'air du module de refroidissement, le conduit étant configuré pour acheminer un air de refroidissement de l'entrée d'air vers l'échangeur thermique, le conduit comporte des éléments de fixation configurés pour fixer l'échangeur thermique au conduit, ledit conduit comprenant une sortie d'air, s'étendant dans un plan parallèle à un plan d'extension du module de refroidissement, et une paroi de recouvrement bordant la sortie d'air et défini par une pluralité de pans s'étendant perpendiculairement au plan d'extension du module de refroidissement, et caractérisé en ce que des premiers éléments de fixation sont disposés en saillie d'une face interne du conduit de manière à loger le premier échange thermique dans un logement défini au moins en partie par la paroi de recouvrement du conduit.

La configuration proposée par l'invention permet diminuer le nombre de pièces à assembler pour former un module de refroidissement, ce qui facilite le montage et diminue les coûts de production d'un tel module de refroidissement. La limitation du nombre de pièces permet en outre d'augmenter la fiabilité d'un tel module de refroidissement en limitant les vibrations au niveau des jonctions entre les pièces et permet par ailleurs de diminuer la consommation du véhicule en diminuant le poids du module de refroidissement.

Selon une caractéristique optionnelle de l'invention, le module de refroidissement peut comprendre deux échangeurs thermiques et le conduit comporte les premiers éléments de fixation configurés pour fixer le premier échangeur thermique au conduit et des deuxièmes éléments de fixation configurés pour fixer un deuxième échangeur thermique au conduit.

Selon différentes caractéristiques optionnelles de l'invention, on pourra prévoir que la sortie d'air est configurée pour que l'air de refroidissement arrive sur une face d'entrée de l'échangeur thermique, et/ou que la sortie d'air du conduit est en regard de la face d'entrée de l'échangeur thermique, et/ou encore que le conduit comprend une paroi de raccordement reliant l'entrée d'air du module de refroidissement à sortie d'air du conduit.

Selon une caractéristique de l'invention, les premiers éléments de fixation sont ainsi disposés en saillie d'une face interne du conduit de manière à loger le premier échange thermique dans un logement défini au moins en partie par la paroi de recouvrement du conduit.

L'au moins un échangeur thermique, ici le premier échangeur thermique, est ainsi rapporté dans le volume défini par le conduit de sorte que l'on diminue les fuites d'air au niveau des jonctions entre les deux pièces que sont l'échangeur thermique et le conduit. Ainsi la gestion de l'étanchéité d'un tel module de refroidissement est à la fois simplifiée et améliorée.

Selon une caractéristique optionnelle de l'invention, la sortie d'air est délimitée par un contour, la paroi de recouvrement s'étendant à partir du contour.

Selon une caractéristique optionnelle de l'invention, la paroi de recouvrement comprend au moins deux pans latéraux opposés agencés de part et d'autre de la sortie d'air, des premiers éléments de fixation étant répartis sur le premier pan latéral et sur le deuxième pan latéral.

Selon une caractéristique optionnelle de l'invention, la paroi de recouvrement est configurée pour recouvrir longitudinalement chaque bord du premier échangeur thermique.

Selon une caractéristique optionnelle de l'invention, les deuxièmes éléments de fixation sont disposés en saillie d'une face externe du conduit de manière à disposer le deuxième échange thermique en regard du premier échangeur thermique, à l'extérieur dudit logement. Ainsi, on comprend que le conduit est configuré pour porter les deux échangeurs thermiques, mais que seul le premier échangeur thermique est recouvert par le conduit et sa paroi de recouvrement, l'autre échangeur étant agencé à l'extérieur au moins partiellement du volume défini par le conduit.

Selon une caractéristique optionnelle, les éléments de fixation agencés sur la face interne du conduit peuvent consister en des moyens de fixation par encliquetage ou par déformation élastique, tandis que les éléments de fixation agencés sur la face externe du conduit peuvent au moins en partie consister en des moyens de fixation nécessitant un outillage, par exemple par vissage.

Selon une caractéristique optionnelle, un pan de la paroi de recouvrement peut être prolongé d'un bord venant en recouvrement du deuxième échangeur thermique.

Selon une caractéristique optionnelle de l'invention, le deuxième échangeur thermique comprend des organes de fixation configurés pour fixer le module de refroidissement au véhicule automobile.

Selon une caractéristique optionnelle, l'échangeur thermique est un condenseur et/ou un radiateur. Plus particulièrement, le premier échangeur thermique est un condenseur et le deuxième échangeur thermique est un radiateur. L'inverse étant possible pour les véhicules électriques.

Selon une caractéristique optionnelle de l'invention, le module de refroidissement comprend un organe de ventilation configuré pour forcer l'entrée de l'air de refroidissement dans le module de refroidissement.

Selon une caractéristique optionnelle, l'organe de ventilation comportant une lèvre de recouvrement configurée pour au moins partiellement recouvrir une partie de la paroi de recouvrement.

Selon une caractéristique optionnelle, l'organe de ventilation est rendu solidaire du conduit et/ou de l'au moins un échangeur thermique. L'organe de ventilation peut comprendre des organes de verrouillage et/ou des organes de maintien configurés pour permettre sa fixation sur l'échangeur et/ou sur le conduit.

Selon une caractéristique optionnelle, l'organe de ventilation est un moto-ventilateur.

Selon une caractéristique optionnelle, le conduit, l'échangeur thermique et l'organe de ventilation sont agencés selon un axe longitudinal du module de refroidissement, l'axe longitudinal correspondant sensiblement à la direction principale de circulation du flux d'air de refroidissement à travers le conduit.

Selon une caractéristique optionnelle de l'invention, les éléments de fixation sont venus de matière avec le conduit. Le conduit, la paroi de recouvrement et les éléments de fixation forment de la sorte un ensemble monobloc, c'est-à-dire un ensemble dont les différentes parties ne peuvent être séparées les unes des autres sans casser l'ensemble.

Selon une caractéristique optionnelle, le conduit comprend un polymère choisi parmi le groupe comprenant un polyamide, un polypropylène, un polytéréphatalate d'éthylène, un polyétherimide et leurs mélanges.

Selon une caractéristique optionnelle le polyétherimide est un polyétherimide thermoplastique amorphe.

Selon une caractéristique optionnelle, le conduit comprend au moins une fibre choisie parmi le groupe comprenant une fibre de carbone, une fibre de verre, une fibre d'aramide et leurs mélanges.

Selon une caractéristique optionnelle, la fibre d'aramide est le poly(p-phénylènephtalamide), aussi appelé communément kevlar.

Selon une caractéristique optionnelle, la fibre est surmoulée du polymère.

La présente description concerne également un procédé d'assemblage d'un module de refroidissement de véhicule automobile présentant une ou plusieurs caractéristiques précédentes. Le procédé comprend une étape d'obtention du module de refroidissement par assemblage du conduit avec l'échangeur thermique. Le procédé peut comprendre une étape d'assemblage de l'organe de ventilation au conduit et/ou à l'échangeur thermique.

Selon une caractéristique optionnelle, l'échangeur thermique étant un condenseur comprenant un réservoir de stockage, l'assemblage de l'échangeur thermique comprend une étape d'insertion du réservoir de stockage dans une partie des éléments de fixation, et une étape ultérieure de verrouillage de l'échangeur au conduit.

Selon différentes caractéristiques optionnelles , l'insertion du réservoir peut s'effectuer à plus de 15° par rapport au plan d'extension du module de refroidissement. Et l'étape de verrouillage peut s'effectuer par pivotement autour d'un axe formé par les éléments de fixation dans lesquels le réservoir de stockage est inséré.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une vue schématique en perspective d'un module de refroidissement selon l'invention,
[fig. 2] est une vue schématique en perspective d'un conduit du module de refroidissement tel qu'illustré par la figure 1,
[fig. 3] est une vue schématique du conduit de la figure 2, selon un autre angle de perspective,
[fig. 4] est une vue schématique en perspective d'un premier échangeur thermique du module de refroidissement tel qu'illustré par la figure 1,
[fig. 5] est une vue schématique en perspective d'un deuxième échangeur thermique du module de refroidissement tel qu'illustré par la figure 1, vu selon un premier angle de vue,
[fig. 6] est une vue de détail de la figure 5, illustrant plus particulièrement un élément de verrouillage du deuxième échangeur thermique,
[fig. 7] est une vue schématique en perspective du deuxième échangeur thermique du module de refroidissement illustré par la figure 5, vu selon un angle de vue différent de celui de la figure 5,
[fig. 8] est une vue de détail de la figure 7, illustrant plus particulièrement un crochet permettant la fixation du deuxième échangeur thermique,
[fig. 9] est une vue schématique en perspective d'un organe de ventilation du module de refroidissement illustré par la figure 1,
[fig. 10] illustre schématiquement l'assemblage des certains composants du module de refroidissement illustré par la figure 1.

Il faut tout d'abord noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

Dans la description qui va suivre, on adoptera à titre non limitatif une orientation longitudinale, verticale et transversale selon l'orientation traditionnellement utilisée dans l'automobile. De plus, les termes « inférieur », « supérieur », « haut », « bas », « vertical » et « horizontal » doivent être interprétés lorsque l'objet est en position normale d'utilisation sur le véhicule. Une direction d'un axe longitudinal X, une direction d'un axe transversal Y, et une direction d'un axe vertical Z sont représentées par un trièdre (X, Y, Z) sur les figures. On définit un plan horizontal comme étant un plan perpendiculaire à l'axe vertical, un plan longitudinal comme étant un plan perpendiculaire à l'axe transversal, et un plan transversal comme étant un plan perpendiculaire à l'axe longitudinal.

Un module de refroidissement 100 selon l'invention, par exemple destiné à être placé en face avant d'un véhicule automobile, comprend un conduit 1 dans lequel est reçu au moins un échangeur thermique 3, 4, le module de refroidissement 100 comprenant également un organe de ventilation 5 servant de dispositif de fermeture pour ledit module de refroidissement 100.

Selon l'invention, et tel que cela sera détaillé ci-après, le conduit 1 comporte des éléments de fixation de l'au moins un échangeur thermique 3, 4 de telle sorte que le conduit réalise à la fois une fonction de guidage de l'air en entrée du module de refroidissement et une fonction structurante de tenue de l'échangeur thermique considéré.

Plus particulièrement, le conduit peut recevoir un premier échangeur thermique 3 et un deuxième échangeur thermique 4 agencés l'un après l'autre selon la direction longitudinale X, et le conduit comporte des éléments de fixation pour chacun de ces échangeurs.

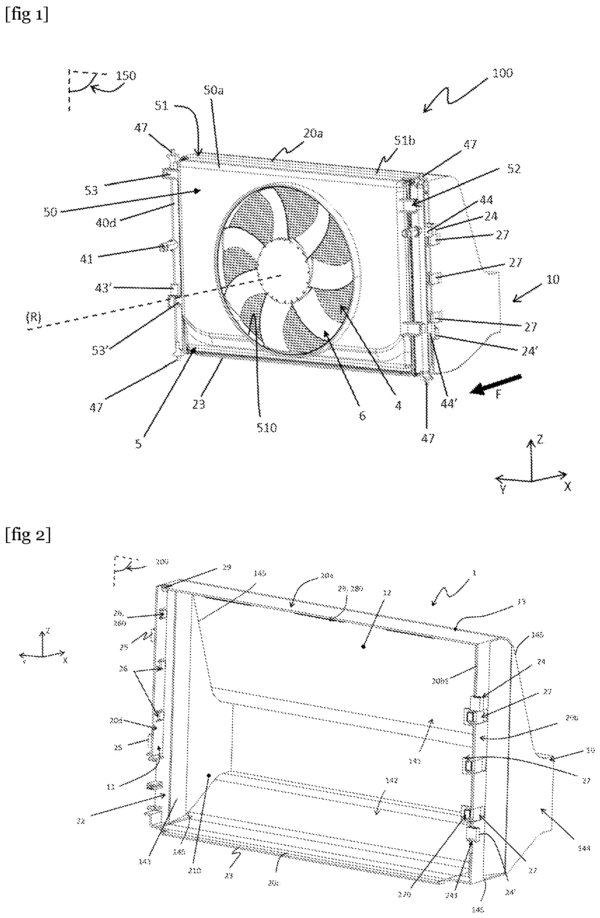

On retrouve sur cette figure 1 le trièdre (X, Y, Z) précédemment défini, dont les directions matérialisent, respectivement, l'épaisseur, la largeur et la hauteur du module de refroidissement 100 selon l'invention et du conduit 1 qu'il comprend.

Dans le module de refroidissement 100, le conduit 1 est configuré pour acheminer, successivement, vers le premier échangeur thermique 3 puis vers le deuxième échangeur thermique 4, un air de refroidissement, par exemple capté à l'extérieur du véhicule automobile équipé du module de refroidissement 100, par exemple au niveau d'une calandre avant d'un tel véhicule. Pour optimiser la circulation de l'air de refroidissement au travers du premier échangeur thermique 3 et du deuxième échangeur thermique 4, notamment lorsque le véhicule roule à faible allure ou est à l'arrêt, l'organe de ventilation 5 est percé d'une découpe 510 dans laquelle est logée une hélice motorisée 6, entraînée en rotation autour d'un axe de rotation R, par un moteur d'entraînement non visible sur la figure 1.

Dans le module de refroidissement 100 ici illustré, la rotation de l'hélice motorisée 6 est réalisée de telle manière qu'elle génère une aspiration d'air de refroidissement au travers des échangeurs thermiques 3, 4, selon un sens représenté par la flèche F sur la figure 1. L'aspiration générée par la rotation de l'hélice motorisée 6 autour de son axe de rotation R contribue à la fois à guider le flux d'air de refroidissement au travers du module de refroidissement 100, ainsi qu'à augmenter la quantité d'air traversant ce dernier.

Les figures 1 et 2 permettent d'illustrer plus particulièrement le conduit 1.

Le conduit 1 comprend une première extrémité longitudinale 10 ouverte sur un extérieur du module de refroidissement de manière à former une entrée d'air du conduit et du dispositif de refroidissement 1 et une deuxième extrémité longitudinale 12 ouverte sur le ou les échangeurs thermiques de manière à former une sortie d'air du conduit. Dans ce qui suit, on parlera d'avant et d'arrière du module de refroidissement, et du conduit, en considérant le sens de circulation de l'air de refroidissement allant de l'entrée d'air, à l'avant du conduit, jusqu'à la sortie d'air, à l'arrière du conduit.

Le contour de l'entrée d'air délimite une surface de l'entrée d'air 10, et le contour de la sortie d'air 12 délimite une surface de la sortie d'air 12. Tel qu'illustré, le conduit présente ici une forme évasée, avec une aire de la surface de la sortie d'air 12 qui est supérieure à une aire de l'entrée d'air 10.

Le contour de l'entrée d'air 10 et le contour de la sortie d'air 12 présentent chacun une forme générale sensiblement rectangulaire vu dans le plan transversal. Plus particulièrement, chaque contour présente un grand côté supérieur et un grand côté inférieur s'étendant selon l'axe transversal Y et deux petits côtés latéraux s'étendant selon l'axe vertical Z.

Le conduit 1 comprend une paroi supérieure 141, une paroi inférieure 142 et deux parois latérales 143, 144. Les quatre parois 141, 142, 143, 144 s'étendent depuis le contour de l'entrée d'air 10 jusqu'au contour de la sortie d'air 12 et deux parois voisines se rejoignent au niveau d'arêtes 145.

Les deux parois latérales 143, 144 s'étendent dans le plan longitudinal en étant planes et parallèles l'une à l'autre. Les deux parois latérales 143,144 relient chacune un petit côté du contour de l'entrée d'air 10 à un petit côté de la sortie d'air 12.

La paroi supérieure 141 relie le grand côté supérieur du contour de l'entrée d'air 10 au grand côté supérieur du contour de la sortie d'air 12 et la paroi inférieure 142 relie le grand côté inférieur du contour de l'entrée d'air 10 au grand côté inférieur du contour de la sortie d'air 12. La paroi supérieure 141 et la paroi inférieure 142 présentent chacune une forme de plaque courbée qui peut être observée dans le plan transversal, les courbures de ces plaques étant telles que la paroi supérieure et la paroi inférieure vont en s'éloignant l'une de l'autre en se rapprochant de la sortie d'air.

Le conduit 1 peut être réalisé en un polymère choisi parmi le groupe comprenant un polyamide, un polypropylène, un polytéréphatalate d'éthylène, un polyétherimide et leurs mélanges. Dans un mode de réalisation préféré, le polyétherimide est un polyétherimide thermoplastique amorphe. Le conduit peut aussi comprendre au moins une fibre choisie parmi le groupe comprenant une fibre de carbone, une fibre de verre, une fibre d'aramide et leurs mélanges. Dans un mode de réalisation préféré, la fibre d'aramide est le poly(p-phénylènephtalamide), aussi appelé communément kevlar. La fibre peut être surmoulée d'un polymère tel que mentionné ci-avant.

Le conduit 1 comprend en outre une paroi de recouvrement 2 qui se développe depuis le contour de la sortie d'air en s'étendant longitudinalement à l'opposé de l'entrée d'air du conduit. Tel qu'illustré, la paroi de recouvrement 2 s'étend tout le long du contour de la sortie d'air 12.

La paroi de recouvrement 2 est formée de quatre pans, respectivement 20a, 20b, 20c, 20d, sensiblement plans, qui délimitent ensemble un logement 210 de réception au moins partielle d'au moins un des échangeurs thermiques 3, 4, non représentés sur la figure 2. Plus précisément, selon l'exemple illustré par les figures, les pans 20a, 20b, 20c, 20d, forment ensemble un parallélépipède rectangle dont la forme rectangulaire principale s'étend selon la direction d'un plan de recouvrement 200, sensiblement parallèle, aux tolérances de fabrication près, à un plan principal d'extension 150 du module de refroidissement 100. Les pans 20a, 20b, 20c, 20d présentent la même dimension selon l'axe longitudinal X, c'est-à-dire dans la direction d'épaisseur du module de refroidissement 100.

Comme le montre la figure 2, les grands côtés de la forme rectangulaire précitée, constitués par le pan supérieur 20a et le pan inférieur 20c parallèle au pan supérieur 20a, s'étendent principalement selon la direction de la largeur du module de refroidissement 100, c'est-à-dire selon la direction de l'axe transversal Y, et les petits côtés de la forme rectangulaire précitée, constitués respectivement par les pans latéraux 20b et 20d, parallèles entre eux et perpendiculaires aux pans supérieur et inférieur 20a, 20c, s'étendent principalement selon la direction de la hauteur du module de refroidissement 100, c'est-à-dire selon la direction de l'axe vertical Z.

Comme le montre la figure 2, la paroi de recouvrement 2 comprend deux lèvres d'arrêt 22 qui se développe chacune dans le plan de recouvrement 200 en saillie d'un pan latéral, depuis le pan supérieur 20a jusqu'au pan inférieur 20b, selon l'axe vertical Z. Les lèvres d'arrêt 22 forment une butée lors de la mise en place du premier échangeur thermique 3. Les lèvres d'arrêt 22 permettent aussi de diminuer la surface de la sortie d'air 12 afin de diriger l'air de refroidissement spécifiquement sur une surface d'échange des échangeurs thermiques 3,4 et de la sorte d'empêcher ou au moins de gêner le passage de l'air de refroidissement entre les pans 20a, 20b, 20c, 20d et les échangeurs thermiques 3,4.

Da manière alternative à ce qui est illustré, des lèvres d'arrêt peuvent être agencées en saillie du pan supérieur et du pan inférieur de manière à former une barrière intérieure sur tour le pourtour du contour de la sortie d'air qui participe alors à former un moyen d'étanchéité intégral visant à gêner la déperdition d'air entre la paroi d'étanchéité et les échangeurs thermiques.

Tel que cela est visible sur la figure 2, la paroi de recouvrement 2 comporte des éléments de fixation pour chacun des deux échangeurs thermiques 3, 4. On distingue parmi ces éléments de fixation des premiers éléments de fixation qui sont tournés vers l'intérieur de la paroi de recouvrement pour la fixation du premier échangeur thermique 3 et des deuxièmes éléments qui sont tournés vers l'extérieur de la paroi de recouvrement pour la fixation du deuxième échangeur. Les premiers éléments de fixation comprennent notamment des éléments de blocage 26, des éléments pivots 27, des organes de blocage 28 et un organe de maintien 29. Les premiers éléments de fixation 26, 27, 28, 29 s'étendent depuis une face interne 11 du conduit, et plus particulièrement une face interne du pan correspondant de la paroi de recouvrement 2, c'est-à-dire depuis une face tournée vers l'intérieur du conduit. Chacun de ces premiers éléments de fixation est configuré pour rendre mécaniquement solidaire la paroi de recouvrement 2 et le deuxième échangeur 4.

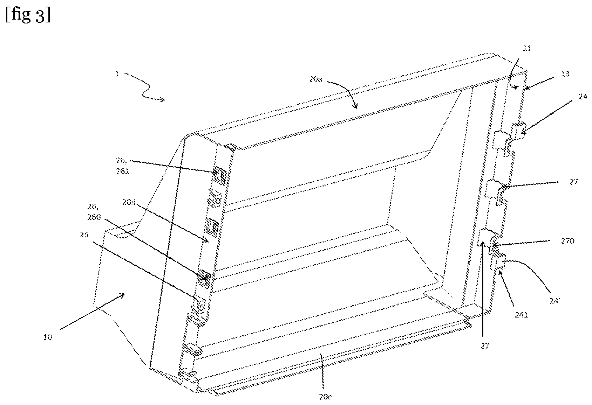

Les éléments pivots 27, ici au nombre de trois, sont agencés au niveau du premier pan latéral 20b et sont notamment visibles sur la figure 3. Ils forment chacune une saillie de la face interne de ce pan latéral en s'étendant en direction de l'intérieur du logement 210. Les trois éléments pivots 27 prennent chacun la forme de lame courbée, sensiblement en forme de demi-cercle ouvert sur l'intérieur du logement, pour former une zone de réception d'un élément latéral du premier échangeur thermique 3 configurée pour créer une liaison pivot du premier échangeur thermique 3 sur le conduit. Chaque élément pivot 27 présente une languette élastiquement déformable 270 visant à bloquer la position de l'élément latéral du premier échangeur thermique dans la lame courbée.

Les éléments de blocage 26, également au nombre de trois, sont agencés sur le pan latéral opposé, à savoir le deuxième pan latéral 20d. Ces éléments de blocage 26 prennent chacun la forme d'une lamelle élastique 260 s'étendant au centre d'un orifice 261 ménagé dans le deuxième pan latéral 20d. Plus particulièrement, cette lamelle élastique présente une configuration d'origine en saillie de la face interne du deuxième pan latéral 20d, en direction de l'intérieur du logement 210, chaque lamelle élastique étant susceptible de s'effacer dans l'orifice 261 lorsque le premier échangeur thermique est inséré dans le logement 210, l'effet de rappel élastique des lamelles élastiques participant à fixer le premier échangeur thermique 3 dans le conduit, en poussant le premier échangeur thermique contre les éléments pivots 27.

Les organes de blocage 28, également au nombre de trois, sont agencés sur le pan supérieur 20a. Ces organes de blocage 28 prennent chacun la forme d'une lame élastique 280 s'étendant en saillie de la face interne du pan supérieure 20a, en direction de l'intérieur du logement 210, chaque lame élastique étant susceptible d'être compressée contre le pan supérieur 20a lorsque le premier échangeur thermique 3 est inséré dans le logement 210, l'effet de rappel élastique des lames élastiques participant à fixer le premier échangeur thermique 3 dans le conduit, en poussant cet échangeur contre le pan inférieur 20b.

L'organe de maintien 29 est agencé sur le pan supérieur 20a. L'organe de maintien 29 se présente sous la forme d'une lame qui s'étend dans le plan du pan supérieur 20a, une extrémité libre de la lame comprenant un ergot qui s'étend en saillie de la face interne du pan supérieur, vers l'intérieur du logement. L'organe de maintien 29 participe au maintien du premier échangeur thermique 3 lorsque ce dernier est agencé dans le logement 210.

Il convient de noter que selon l'invention le conduit comporte une pluralité de premiers éléments de fixation agencés vers l'intérieur du logement pour assurer la fixation du premier échangeur thermique, et que l'on pourra modifier le nombre et la forme de ces premiers éléments de fixation sans sortir du cadre de l'invention.

Les deuxièmes éléments de fixation 24, 24', 25 s'étendent depuis une face externe 13 du conduit, et plus particulièrement une face externe du pan latéral correspondant, c'est-à-dire depuis une face tournée à l'opposé du pan latéral opposé. En d'autres termes, les deuxièmes éléments de fixation s'étendent vers l'extérieur du conduit 1. Chacun de ces deuxièmes éléments de fixation est configuré pour rendre mécaniquement solidaire la paroi de recouvrement 2 et le deuxième échangeur 4.

Ces deuxièmes éléments de fixation comportent ici des pièces de fixation 24, 24', agencées sur un pan latéral, et des pattes de maintien 25, agencées sur le pan latéral opposé.

Ici, les pièces de fixation 24, 24' sont rapportées sur une face externe d'un premier pan latéral 20b, au voisinage d'une arête 20b1 de la paroi de recouvrement au niveau de ce premier plan latéral 20b. Les pièces de fixation 24, 24' consistent chacune en une poche dimensionnée pour recevoir un crochet solidaire du deuxième échangeur de chaleur, chaque poche étant au moins ouverte sur un côté inférieur, tourné vers le pan inférieur 20a de la paroi de recouvrement 2.

Selon l'exemple illustré par la figure 2, une première pièce de fixation 24 est agencée, selon la direction de la hauteur du module de refroidissement 100 matérialisée par l'axe vertical Z au voisinage du pan supérieur 20a et une deuxième pièce de fixation 24' est agencée, selon cette direction de la hauteur du module de refroidissement, au voisinage du pan inférieur 20c. Selon cet exemple, la deuxième pièce de fixation 24' comporte une fenêtre 241 de blocage du deuxième échangeur thermique 4 avec le logement 210, ménagée dans une paroi de la pièce de fixation 24' disposée à l'opposé de l'entrée d'air. Tel que cela sera décrit ci-après, cette fenêtre 241 permet le blocage du deuxième échangeur thermique par coopération avec un doigt d'encliquetage formée sur le crochet précédemment évoqué.

Les deux pattes de maintien 25 sont agencées sur la face externe d'un deuxième pan latéral 20d de la paroi de recouvrement 2 opposée au premier pan latéral 20b précité. Chaque patte de maintien 25 forme une saillie de ce pan latéral selon une direction sensiblement parallèle à celle de l'axe transversal Y et comporte un orifice de réception, par exemple, d'une vis de maintien non représentée sur la figure 3.

Comme illustré sur les figures 2 et 3, le pan inférieur 20c est prolongé par un bord 23 dans la direction d'épaisseur du module de refroidissement 100, donc vers l'arrière selon l'axe longitudinal X. Le bord 23 prolonge le pan inférieur 20c dans le plan horizontal et sert de support et de guide pour monter l'échangeur thermique 4. Il permet aussi de limiter les fuites d'air de refroidissement vers l'extérieur du module de refroidissement 100, entre les deux échangeurs thermiques lorsqu'ils sont montés sur le conduit.

Selon un mode de réalisation non représenté, le bord s'étend longitudinalement vers l'arrière sur une distance suffisante pour servir également de support et de guide pour monter l'organe de ventilation 5.

La paroi de recouvrement 2 est venue de matière avec le conduit 1. En d'autres termes, le conduit 1 et la paroi de recouvrement 2, ainsi que tous les éléments de fixation qu'elle comprend, forment une seule et même pièce, et donc sont faits du ou des mêmes matériaux. Cette pièce peut être obtenue par exemple par moulage ou par injection. Cette pièce est donc différente d'éléments rapportés par soudage ou collage. Il est ainsi notable que les échangeurs thermiques sont fixés directement sur la pièce qui assure par ailleurs le guidage de l'air à travers le module de refroidissement.

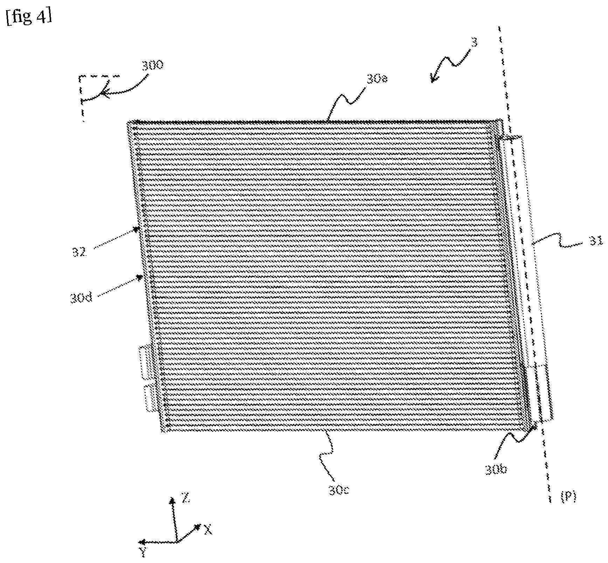

La figure 4 illustre schématiquement, en perspective, le premier échangeur thermique 3 d'un module de refroidissement 100 tel que celui illustré par la figure 1. On retrouve sur cette figure le trièdre (X, Y, Z) précédemment défini, dont les directions matérialisent, respectivement, l'épaisseur, la largeur et la hauteur du module de refroidissement 100 selon l'invention et du premier échangeur thermique 3.

Le premier échangeur thermique 3 présente ici la forme générale d'un parallélépipède rectangle dont la forme rectangulaire de plus grande dimension s'étend sensiblement selon un plan principal d'extension 300 du premier échangeur thermique 3, sensiblement parallèle, aux tolérances de fabrication et d'assemblage près, au plan principal d'extension 150 du module de refroidissement 100.

Le premier échangeur thermique 3 comporte un corps délimité par quatre faces d'extrémité, respectivement 30a, 30b, 30c, 30d, sensiblement parallèles entre elles deux à deux et sensiblement perpendiculaires entre elles deux à deux. Plus précisément, le premier échangeur thermique 3 comprend une face d'extrémité supérieure 30a et une face d'extrémité inférieure 30c, sensiblement parallèles entre elles et formant les grands côtés du corps du premier échangeur thermique 3, et il comprend deux faces d'extrémité latérales 30b, 30d, sensiblement parallèles entre elles et perpendiculaires aux faces d'extrémité supérieure 30a et inférieure 300 précitées, et formant les petits côtés du corps du premier échangeur thermique 3.

Tel qu'illustré, le premier échangeur thermique 3 présente une surface d'échange de chaleur, ici formé par une pluralité de tubes transversaux qui s'étendent entre deux chambres collectrices 32 ménagées à chacune des faces d'extrémité latérales 30b, 30d sur sensiblement la totalité de la dimension, selon la direction de l'axe vertical Z, du premier échangeur thermique 3.

Selon l'exemple plus particulièrement illustré par la figure 4, le premier échangeur thermique 3 fonctionne comme un condenseur : il comprend ici, agencé au voisinage de l'une de ses faces d'extrémité latérales 30d, un réservoir 31 de stockage d'un fluide réfrigérant qui forme de la sorte l'élément latéral du premier échangeur thermique précédemment évoqué, susceptible de coopérer avec les éléments pivots 27 de la paroi de recouvrement. Le réservoir de stockage 31 s'étend principalement selon la direction de l'axe vertical Z du trièdre (X, Y, Z) sur sensiblement toute la hauteur du premier échangeur thermique 3, le long de la face d'extrémité latérale correspondante.

Dans le module de refroidissement 100, et en référence à la figure 1, le premier échangeur thermique 3 est apte à être engagé dans le logement 210 défini par le conduit 1, avec chacune de ses faces d'extrémité qui est recouverte par la paroi de recouvrement 2 du conduit 1. Plus particulièrement, dans cette position assemblée du premier échangeur thermique 3 dans le volume défini par le conduit et sa paroi de recouvrement, la face d'extrémité supérieure 30a du premier échangeur thermique 3 est en regard du pan supérieur 20a, la face d'extrémité inférieure 30c du premier échangeur thermique 3 est en regard du pan inférieur 20c, et les faces d'extrémité latérales 30b, 30d sont en regard des pans latéraux 20b et 20d de la paroi de recouvrement 2.

Le montage du premier échangeur thermique 3 dans le conduit 1 et son logement 210 s'effectue par exemple en approchant l'échangeur thermique 3 du logement 210 avec un angle d'inclinaison tel que l'on approche le réservoir de stockage 31 du premier pan latéral 20b de la paroi de recouvrement. Par exemple, l'échangeur thermique 3 et le plan principal d'extension 150 du module de refroidissement peuvent former alors un angle de 45°. Le réservoir de stockage 31 est engagé dans les éléments pivot 27 agencés sur le premier pan latéral 20b de la paroi de recouvrement 2. La coopération de forme entre les lames courbes des éléments pivots et la forme cylindrique circulaire du réservoir de stockage permettent de créer une liaison pivot dont un axe de pivotement P correspond à l'alignement vertical des éléments pivots et du réservoir de stockage 3.

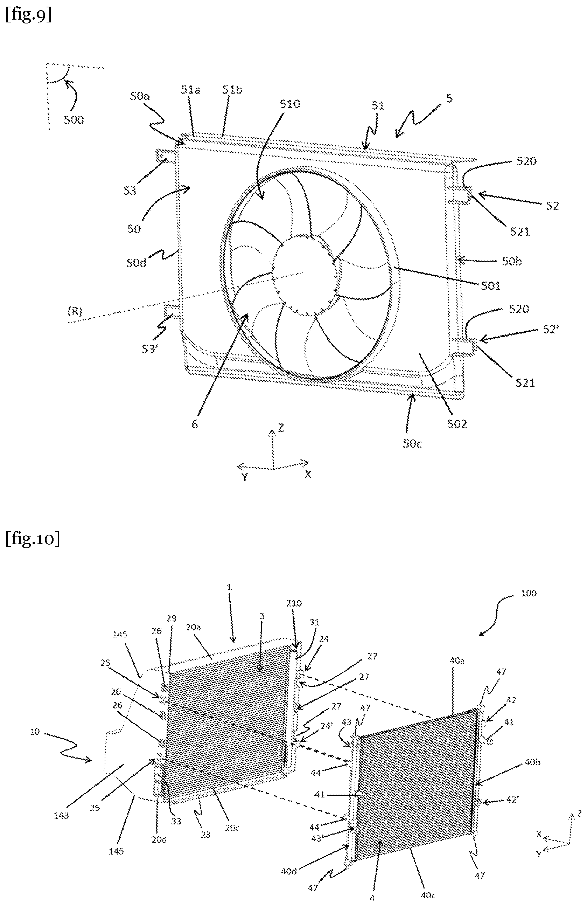

Dans un deuxième temps, le premier échangeur thermique 3 est basculé autour de cet axe de pivotement afin que la chambre collectrice 32 opposée au réservoir de stockage 31 vienne en regard du deuxième pan latéral 20d de la paroi de recouvrement 2, en venant déformer les lamelles élastiques 260 formant les organes de blocage 26. La force de rappel de ces lamelles élastiques tend à pousser le premier échangeur thermique en direction des éléments pivots, en plaquant le réservoir de stockage dans ces éléments pivots 27 au sein desquels les languettes élastiquement déformables 270 permettent de bloquer la position du premier échangeur thermique 3. Les organes de blocage 26, déformés et rappelés élastiquement en position, permettent d'éviter notamment un débattement du premier échangeur selon l'axe transversal Y. Concomitamment, la face d'extrémité supérieure 30a de l'échangeur thermique se positionne en regard du pan supérieur 20a en écartant l'ergot de l'organe de maintien 29, la force de rappel élastique de ce dernier permettant à l'ergot de reprendre une position de blocage du premier échangeur thermique est en position en regard du pan supérieur de manière à empêcher le débattement de l'échangeur thermique 3 selon l'axe longitudinal X. Enfin, les lames élastiques des organes de blocage 28, une fois le premier échangeur thermique 3 en regard du pan supérieur 20a tendent à pousser l'échangeur contre le pan inférieur opposé et donc à limiter le débattement selon l'axe vertical Z. La figure 10 permet notamment d'illustrer la position du premier dissipateur thermique 3 dans le logement 210 une fois monté dans celui-ci.

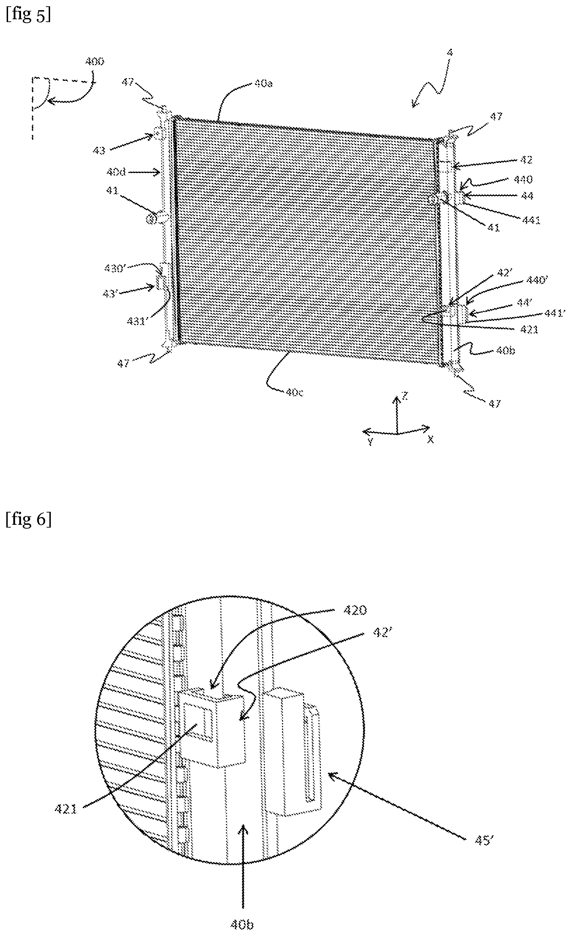

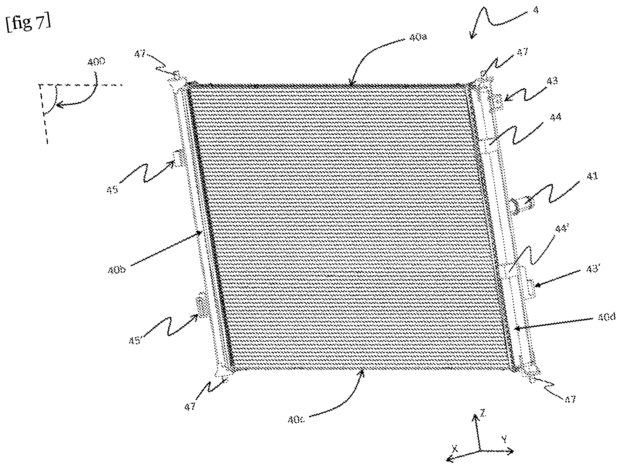

Les figures 5 à 7 illustrent schématiquement en perspective le deuxième échangeur 4 du module de refroidissement 100, selon deux angles de vue différents. Plus précisément, la figure 5 illustre le deuxième échangeur thermique 4 vu du côté de l'organe de ventilation 5 dans un module de refroidissement 100 tel que celui illustré par la figure 1, et la figure 7 illustre le deuxième échangeur thermique 4 vu du côté de l'entrée d'air 10 d'un tel module de refroidissement 100. En d'autres termes, la figure 4 montre l'arrière du deuxième échangeur thermique 4 et la figure 6 montre l'avant du deuxième échangeur thermique 4 en référence aux orientations longitudinales précédemment décrites. On retrouve sur ces figures le trièdre (X, Y, Z) précédemment défini, dont les axes matérialisent respectivement l'épaisseur, la largeur et la hauteur du module de refroidissement 100 et du deuxième échangeur thermique 4.

En référence aux figures 5 et 7, le deuxième échangeur thermique 4 présente la forme générale d'un parallélépipède rectangle dont la forme rectangulaire de plus grande dimension s'étend selon un plan principal d'extension 400 du deuxième échangeur thermique 4. Dans le module de refroidissement 100 selon l'invention, le plan principal d'extension 400 du deuxième échangeur thermique 4 est sensiblement parallèle, aux tolérances de fabrication et d'assemblage près, au plan principal d'extension 150 du module de refroidissement 100.

Le deuxième échangeur thermique 4 comporte un corps délimité par quatre rebords, respectivement 40a, 40b, 40c, 40d, sensiblement parallèles entre eux deux à deux et sensiblement perpendiculaires entre eux deux à deux. Plus précisément, le deuxième échangeur thermique 4 comprend un rebord supérieur 40a et un rebord inférieur 40c, sensiblement parallèles entre eux et formant les grands côtés du corps, ainsi que deux rebords latéraux 40b, 40d, sensiblement parallèles entre eux et perpendiculaires au rebord supérieur 40a et au rebord inférieur 40c précités, et formant les petits côtés du corps.

Dans le module de refroidissement 100, et en référence également à la figure 1, le rebord supérieur 40a du deuxième échangeur thermique 4 est engagé dans le logement 210 délimité par la paroi de recouvrement 2 au voisinage du pan supérieur 20a de ce dernier. Il s'ensuit que le rebord inférieur 40c du deuxième échangeur thermique 4 est reçu, dans ce logement, au voisinage du pan inférieur 20c, les rebords latéraux 40b et 40d étant agencés au voisinage des pan latéraux 20b et 20d de la paroi de recouvrement 2.

Tel qu'illustré, le deuxième échangeur thermique 4 présente une surface d'échange de chaleur, ici formé par une pluralité de tubes transversaux qui s'étendent entre deux chambres collectrices 41 ménagées à chacun des rebords latéraux 40b, 40d sur sensiblement la totalité de la dimension, selon la direction de l'axe vertical Z, du deuxième échangeur thermique 4. Ce dernier comprend en outre deux embouts 410, respectivement reliés fluidiquement à l'une des chambres collectrices, qui permettent l'entrée et la sortie d'un fluide de refroidissement au sein du deuxième échangeur thermique 4. Le deuxième échangeur thermique 4 fonctionne ici comme un radiateur, avec du fluide de refroidissement circulant d'une chambre collectrice à l'autre, ces chambres étant disposées latéralement au corps du deuxième échangeur thermique et étant reliées respectivement à une boucle de circulation de fluide de refroidissement via les embouts 41. Chaque embout s'étend ici sensiblement perpendiculairement au plan principal d'extension 400 du deuxième échangeur thermique 4, et d'un même côté de ce dernier parallèlement à l'axe longitudinal X. Plus précisément, et en référence également à la figure 1, les embouts 41 s'étendent, dans le module de refroidissement 100, en direction de l'organe de ventilation 5.

Le deuxième échangeur thermique 4 comprend deux éléments de verrouillage, un premier élément de verrouillage 42 et un deuxième élément de verrouillage 42', configurés pour rendre le deuxième échangeur thermique 4 mécaniquement solidaire de l'organe de ventilation 5 du module de refroidissement 100.

En référence à la figure 5, les éléments de verrouillage 42, 42' sont agencés à partir d'un premier rebord latéral 40b du deuxième échangeur thermique 4, et plus précisément, en formant une saillie vers l'arrière du rebord latéral 40b précité, de manière à pouvoir coopérer avec l'organe de ventilation 5. Comme le montrent les figures 5 et 7, un premier élément de verrouillage 42 est agencé, selon la direction de l'axe vertical Z, au voisinage du rebord supérieur 40a du deuxième échangeur thermique 4, et un deuxième élément de verrouillage 42' est agencé, selon la direction de l'axe vertical Z, au voisinage du rebord inférieur 40c du deuxième échangeur thermique 4.

Chaque élément de verrouillage 42, 42' délimite, avec le rebord latéral 40b à partir duquel il s'étend, un fourreau 420 traversant selon l'axe vertical Z. Plus particulièrement, le fourreau de chaque élément de verrouillage débouche en direction du rebord supérieur 40a du deuxième échangeur thermique 4. Le deuxième élément de verrouillage 42' comporte une fenêtre de blocage 421 agencée dans une paroi du premier élément de verrouillage 42 tournée vers l'arrière du module de refroidissement 100, c'est-à-dire tournée vers l'organe de ventilation 5, tel que cela est notamment visible sur le détail de la figure 6.

Les formes et dimensions des fourreaux 420, respectivement, du premier élément de verrouillage 42 et du deuxième élément de verrouillage 42' sont définies pour permettre l'engagement en leur sein de moyens complémentaires portés par l'organe de ventilation 5, ici des agrafes 521 tels que visible sur la figure 9 notamment. On comprend que la forme et les dimensions d'une agrafe 521 de l'organe de ventilation 5, destiné à être engagé dans le fourreau 420 du deuxième élément de verrouillage 42', sont définies de telle manière qu'une fois cet engagement réalisé, une partie de l'agrafe 521 précitée coopère avec la fenêtre de blocage 421, par exemple par encliquetage, pour bloquer l'organe de ventilation 5 et le deuxième échangeur thermique 4 ensemble selon la direction de l'axe vertical Z.

Par ailleurs, le deuxième échangeur thermique 4 comprend, agencée à partir de l'arrière de son deuxième rebord latéral 40d, opposé au premier rebord latérale 40b, une patte de sécurisation 43, qui forme une saillie de ce deuxième rebord latéral vers l'arrière du deuxième échangeur thermique 4. Selon cet exemple, la patte de sécurisation 43 comporte un orifice agencé pour recevoir, sensiblement perpendiculairement au plan principal d'extension 400 du deuxième échangeur 4, un moyen de sécurisation mécanique du deuxième échangeur thermique 4 avec l'organe de ventilation 5, et par exemple une vis de serrage.

Le deuxième échangeur thermique 4 comprend également, sur ce deuxième rebord latéral 40d, un élément de support 43' qui s'étend en saillie en direction de l'arrière du deuxième échangeur thermique 4 selon la direction de l'axe longitudinal X. Selon cet exemple de réalisation, l'élément de support 43' présente une forme en U ouvert sur le dessus, c'est-à-dire avec une ouverture tournée vers le rebord supérieur 40a, et délimite de la sorte un logement d'accueil 430', fermé par une paroi de butée 431' qui forme la base du U et qui s'étend sensiblement perpendiculairement au plan principal d'extension 400 du deuxième échangeur thermique 4. Cet élément de support est destiné à recevoir une patte de l'organe de ventilation pour assurer sa position et le maintenir en position par rapport au deuxième échangeur thermique avant sa fixation via la patte de sécurisation 43 et le moyen de sécurisation associé.

La figure 7 montre le deuxième échangeur thermique 4 vu du côté de l'entrée d'air 10 du module de refroidissement 100 selon l'invention, c'est-à-dire vu du côté par lequel le deuxième échangeur thermique 4 est en partie reçu dans le logement 210 défini par la paroi de recouvrement 2 du module de refroidissement 100.

En référence à cette figure 7 et à la figure 5, le deuxième échangeur thermique 4 comporte deux butées de fixation 44 agencées à partir du deuxième rebord latéral 40d. Ces butées de fixation 44 sont agencées respectivement au voisinage du rebord supérieur 40a et du rebord inférieur 40c du deuxième échangeur thermique 4 et elles s'étendent chacune en saillie du deuxième rebord latéral vers l'avant du module de refroidissement, c'est-à-dire vers le conduit et le premier échangeur thermique 3. Dans le module de refroidissement 100 selon l'invention, et en référence également à la figure 1, les butées de fixation 44 précitées sont configurées pour coopérer avec les pattes de maintien 25 agencées sur l'extérieur du deuxième pan latéral 20d de la paroi de recouvrement 2, afin de participer à la fixation du deuxième échangeur thermique 4 sur le conduit 1.

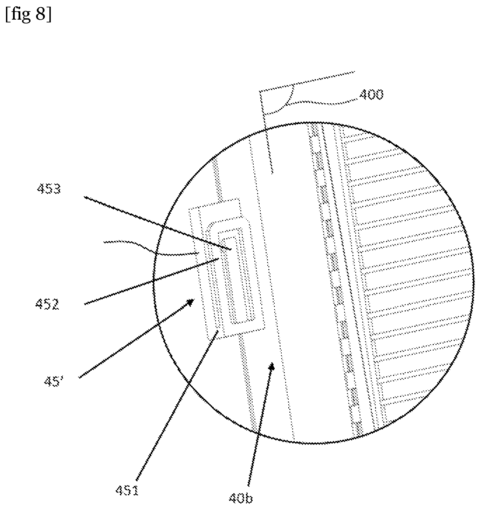

Complémentairement, et comme le montre plus particulièrement les figures 7 et 8, le deuxième échangeur thermique 4 comprend également deux crochets 45, 45' agencés sur le deuxième rebord latéral 40b, de manière à former une saillie transversale avec le crochet qui est ouvert vers l'avant du module de refroidissement 100. Plus précisément, un premier crochet 45 est agencé, selon la direction de l'axe vertical Z, au voisinage du rebord supérieur 40a du deuxième échangeur thermique 4, et un deuxième crochet 45' est agencé, selon la direction de cet axe vertical Z, au voisinage du rebord inférieur 40c du deuxième échangeur thermique 4. Chaque crochet 45, 45' comporte une paroi de base 450 qui prolonge transversalement le deuxième rebord latéral 40b, une paroi de renvoi 451 qui s'étend perpendiculairement à cette paroi de base et perpendiculairement au plan principal d'extension 400 du deuxième échangeur thermique 4, et une paroi de fixation 452, qui prolonge perpendiculairement la paroi de renvoi en direction du bord supérieur 40a du deuxième échangeur thermique 4 et qui s'étend parallèlement au plan principal d'extension 400 du deuxième échangeur thermique 4, en formant de la sorte une encoche entre la paroi de base 450 et la paroi de fixation 452. La paroi de fixation 452 du deuxième crochet 45' comporte un doigt de fixation élastique 453 apte à coopérer avec la fenêtre de blocage 241 de la deuxième pièce de fixation 24'.

Selon l'invention, les crochets 45, 45' sont configurés pour être engagés dans les poches des pièces de fixation 24, 24' agencées sur la paroi de recouvrement 2 du conduit 1 du module de refroidissement 100. Plus précisément, il résulte de ce qui précède qu'un tel engagement est réalisé, dans le module de refroidissement 100 selon l'invention, selon une direction sensiblement parallèle au plan principal d'extension 150 de ce dernier, et, plus précisément encore, selon une direction parallèle à la hauteur de ce dernier, matérialisée par la direction de l'axe vertical Z. Avantageusement, la paroi de fond s'inscrit dans la fenêtre de blocage 241 pour positionner le crochet et le deuxième échangeur thermique 4 par rapport au conduit 1. La forme et les dimensions des crochets 45, 45' sont définies de telle manière qu'une fois cet engagement réalisé, une partie du deuxième crochet 45', c'est-à-dire le doigt 453, coopère avec le bord supérieur de la deuxième pièce de fixation 24' pour bloquer par encliquetage le deuxième échangeur thermique 4 et le conduit 1 ensemble selon la direction de l'axe vertical Z précédemment évoqué.

En référence aux figures 5 et 7, le deuxième échangeur thermique 4 comprend des organes de fixation 47. Ils permettent de positionner et sécuriser le module de refroidissement 100 dans un véhicule. Les organes de fixation 47sont agencés en saillie verticale du corps de l'échangeur 4, selon la direction de l'axe vertical Z, à partir des extrémités des bords latéraux vers l'extérieur du module de refroidissement 100.

Il est notable selon l'invention que le conduit 1 est rendu directement solidaire de chacun des deux échangeurs thermiques, de manière à former un module de refroidissement avec un nombre minimal de composants, et que c'est le deuxième échangeur thermique 4, ici un radiateur, qui consiste en le composant le plus lourd de ce module de refroidissement, qui permet la fixation du module sur le véhicule.

Comme illustrée sur la figure 10, l'assemblage du deuxième échangeur thermique 4 avec le conduit 1 est effectué après que le premier échangeur thermique 3 ait été monté dans le logement 210 du conduit 1. L'assemblage est réalisé à la fois par engagement, selon une direction parallèle à celle du plan principal d'extension 150 du module de refroidissement, des crochets 45, 45' du deuxième échangeur thermique 4 avec les pièces de fixation 24, 24' de la paroi de recouvrement 2, et par sécurisation, selon une direction perpendiculaire au plan principal d'extension 150 précité, de cet engagement, par exemple au moyen d'une vis insérée à la fois dans les pattes de maintien 25 de la paroi de recouvrement 2 et dans les butées de fixation 44 du deuxième échangeur thermique 4. Le bord 23 permet de guider le deuxième échangeur thermique 4 lors de son montage. Il résulte donc de ce qui précède que, dans le module de refroidissement 100 selon l'invention, le deuxième échangeur thermique 4 est fixé sur le conduit 1, en regard du premier échangeur thermique 3 de manière à être superposé à ce premier échangeur thermique 3 selon l'axe longitudinal X. Plus particulièrement, le premier échangeur thermique 3 est disposé dans le logement 210, entouré sur son pourtour, à l'exception d'une zone de brides de raccordement 33, par la paroi de recouvrement 2, tandis que le deuxième échangeur thermique 4 est disposé en dehors de ce logement, mais tenu par les deuxièmes éléments de fixation solidaires du conduit 1, agencés sur les faces externes de la paroi de recouvrement.

La figure 9 est une vue schématique en perspective de l'organe de ventilation 5 d'un module de refroidissement 100 tel que celui illustré par la figure 1. On retrouve sur cette figure le trièdre (X, Y, Z), ainsi que la découpe 510 agencée dans l'organe de ventilation 5 et l'hélice motorisée 6 logée dans la découpe 510 précitée. Cette figure rend plus visible une couronne 501 formant saillie d'une face arrière 502 de l'organe de ventilation 5, la face arrière 502 étant tournée à l'opposé du conduit 1. Cette couronne 501 forme un logement pour l'hélice motorisée 6 de sorte qu'elle ne soit pas au contact du deuxième échangeur de chaleur 4, le plus proche de l'organe de ventilation 5.

L'organe de ventilation 5 comprend plus particulièrement une cloison 50 sensiblement plane s'étendant selon un plan principal d'extension 500 de l'organe de ventilation, sensiblement parallèle, aux tolérances de fabrication près, au plan principal d'extension 150, du module de refroidissement 100, visible sur la figure 1 et la couronne 501 s'étend sensiblement au centre de cette cloison 50.

Plus précisément, la cloison 50 de l'organe de ventilation 5 présente la forme générale d'un rectangle dont les grands côtés, parallèles entre eux, sont dirigés selon la largeur du module de refroidissement 100, matérialisée par la direction de l'axe transversal Y, et dont les petits côtés, parallèles entre eux et perpendiculaires aux grands côtés précités, sont dirigés selon la hauteur, précédemment, du module de refroidissement 100, matérialisée par la direction de l'axe vertical Z.

Comme le montre la figure 8, les bords de la cloison 50, respectivement 50a, 50b, 50c, 50d, sont recourbés selon la direction de l'épaisseur du module de refroidissement 100, matérialisée par la direction de l'axe longitudinal X. En d'autres termes, les bords 50a, 50b, 50c, 50d, de la cloison 50 de l'organe de ventilation 5 sont recourbés selon une direction perpendiculaire au plan principal d'extension 500 de l'organe de ventilation 5 et au plan principal d'extension 150 du module de refroidissement 100. Chacun des bords recourbés de la cloison s'étend vers l'avant du module de refroidissement, c'est-à-dire en direction du conduit 1, de manière à former avec la paroi centrale de la cloison une cuvette permettant de loger des composants du module de refroidissement et notamment de loger partiellement le deuxième échangeur de chaleur.

Selon l'invention, l'organe de ventilation 5 comporte une lèvre de recouvrement 51 qui prolonge l'un des bords recourbés de la cloison 50, perpendiculairement à cette dernière. Selon l'exemple plus particulièrement décrit et illustré ici, la lèvre de recouvrement forme un prolongement, selon la direction de l'axe X, c'est-à-dire selon la direction de l'épaisseur du module de refroidissement 100, d'un bord recourbé 50a de la cloison 50, arbitrairement désigné dans ce qui suit comme bord recourbé supérieur 50a de l'organe de ventilation 5, tandis que les trois autres bords recourbés 50b, 50c, 50d présentent des dimensions, mesurées perpendiculairement au plan principal d'extension 500 de l'organe de ventilation 5, sensiblement identiques.

La lèvre de recouvrement 51 s'étend, en référence aux directions et orientations précédemment définies, sur la totalité de la largeur de l'organe de ventilation 5. Selon d'autres exemples non représentés par les figures, la lèvre de recouvrement 51 peut prolonger simultanément le bord supérieur recourbé 50a précité et au moins partiellement l'un des bords recourbés 50b, 50d adjacent à ce bord supérieur, de telle sorte que la lèvre de recouvrement 51 forme alors un angle droit.

Selon l'exemple plus particulièrement illustré par les figures, la lèvre de recouvrement 51 est formée d'une première partie 51a, perpendiculaire au bord supérieur recourbé 50a et sensiblement parallèle au plan principal d'extension 500 de la cloison 50 de l'organe de ventilation 5, et d'une deuxième partie 51b, sensiblement perpendiculaire au plan principal d'extension 500 précité. Plus précisément, selon l'exemple illustré par la figure 8, la première partie 51a de la paroi de recouvrement s'étend dans le prolongement direct du bord recourbé supérieur 50a, perpendiculairement à ce bord recourbé, et la deuxième partie 51b de la lèvre de recouvrement 51 s'étend, à partir de l'extrémité de la première partie 51a opposée à la paroi principale, perpendiculairement au plan principal d'extension 500 de l'organe de ventilation 5, dans le même sens que les bords recourbés 50a, 50b, 50c, 50d, c'est-à-dire, dans le module de refroidissement 100 et en référence également à la figure 1, en direction de l'entrée d'air 10 du module de refroidissement 100.

Il en résulte une position surélevée de la deuxième partie 51b de la paroi de recouvrement 50 qui permet que, comme le montre la figure 1, dans le module de refroidissement 100, la deuxième partie 51b de la lèvre de recouvrement 51 se trouve en appui sur le pan supérieur 20a de la paroi de recouvrement 2 tandis que le bord supérieur recourbé 50a se trouve sensiblement à même hauteur que ce pan supérieur 20a. Avantageusement, la dimension, selon la hauteur de l'organe de ventilation 5, de la première partie 51a de la lèvre de recouvrement 51, est définie pour garantir que la deuxième partie 51b de la paroi de recouvrement se place, dans le module de refroidissement 100, en appui au-dessus du pan supérieur 20a de la paroi de recouvrement 2, en prenant en compte d'éventuels écarts dimensionnels de la paroi de recouvrement 2 et de la cloison 50 de l'organe de ventilation 5, notamment selon la direction de la hauteur du module de refroidissement 100.

Dans l'exemple illustré, la lèvre de recouvrement 51 est légèrement inclinée par rapport à un plan d'extension du pan supérieur 20a de la paroi de recouvrement 2, de sorte que l'extrémité libre de la deuxième partie 51b de la lèvre de recouvrement 51, opposée à la première partie 51a de la lèvre de recouvrement 51, pointe en direction du pan supérieur 20a. De la sorte, lorsque le module de refroidissement 100 est assemblé, on garantit la mise en appui de la lèvre de recouvrement 51 sur le pan supérieur 20a.

Il convient de noter dans ce contexte que le dimensionnement de la lèvre de recouvrement 51, une forme en marche d'escalier de la lèvre de recouvrement, et la disposition de l'extrémité libre de la deuxième partie 51b à distance du bord supérieur recourbé 50a, permettent de donner une flexibilité à cette lèvre de recouvrement, qui participe à maintenir la mise en appui de la lèvre de recouvrement 51 sur le pan supérieur 20a.

L'organe de ventilation 5 comprend deux organes de verrouillage 52, 52' qui s'étendent chacun à partir d'un premier bord recourbé latéral 50b, c'est à dire à partir d'un premier petit côté de la cloison 50. Tel que cela est plus particulièrement visible sur la figure o, les organes de verrouillage 52, 52' sont agencés à partir du bord recourbé 50b considéré, et ils s'étendent en saillie de ce bord recourbé selon une direction parallèle à celle de la largeur, matérialisée par l'axe transversal Y, de l'organe de ventilation 5, c'est-à-dire à l'opposé de la cloison 50. Dans un module de refroidissement 100 équipé d'un organe de ventilation 5 tel que celui illustré par la figure 9, et comme le montre la figure 1, les organes de verrouillage 52, 52' s'étendent vers l'extérieur du module de refroidissement 100 selon la largeur de ce dernier.

Un premier organe de verrouillage 52 est agencé au voisinage du bord recourbé supérieur 50a de la cloison 50 de l'organe de ventilation 5, et un deuxième organe de verrouillage 52' est agencé au voisinage du bord opposé au bord recourbé supérieur, c'est-à-dire un bord recourbé inférieur 50c de la cloison 50.

Selon l'exemple illustré par la figure 9, un organe de verrouillage 52, 52' comprend un premier élément 520 et une agrafe 521 tel que précédemment évoquée.

Le premier élément 520 présente sensiblement la forme d'un U dont la base est sensiblement parallèle au plan principal d'extension 500 de l'organe de ventilation 5 et dont les branches, sensiblement parallèles entre elles, sont sensiblement perpendiculaires au plan principal d'extension 500 précité en étant respectivement dirigées à l'opposé des bords recourbés 50a, 50b, 50c, 50d, de la cloison 50.

L'agrafe 521 s'étend à partir de la base du U formé par le premier élément 520 et elle forme, avec le premier élément 520, une encoche de réception 522 fermée du côté du bord recourbé supérieur 50a et de la lèvre de recouvrement 51, et ouverte du côté du bord recourbé inférieur 50c opposé, l'encoche de réception 522 s'étendant selon une direction principale sensiblement parallèle, aux tolérances de fabrication près, au plan principal d'extension 500 de l'organe de ventilation 5.

L'organe de ventilation 5 comprend également deux organes de maintien 53, 53' qui s'étendent à partir du bord recourbé correspondant au deuxième petit côté 50d opposé au premier petit côté 50b, dans le prolongement de la cloison 50, en direction de l'extérieur de l'organe de ventilation 5. Un premier organe de maintien 53 est agencé au voisinage du bord recourbé supérieur 50a de la cloison 50 de l'organe de ventilation 5, et un deuxième organe de maintien 53' est agencé au voisinage du bord recourbé inférieur 50c, précédemment défini, de la cloison 50 précitée.

Selon l'exemple, non limitatif, plus particulièrement illustré par la figure 1, chaque organe de maintien 53, 53' prend la forme d'une patte sensiblement parallèle au plan principal d'extension 500 de l'organe de ventilation 5. Le premier organe de maintien 53 est percé d'un orifice de réception, par exemple, d'une vis ou d'un rivet de fixation de sorte que cette vis ou ce rivet puisse traverser l'organe de maintien 53 et coopérer avec l'orifice de la patte de sécurisation 43 correspondant sur le deuxième échangeur thermique 4. Le deuxième organe de maintien 53' coopère avec l'élément de support 43' en venant en butée avec un fond du logement d'accueil 430' de cet élément de support 43'. Selon un mode de réalisation non représenté, l'organe de ventilation 5 peut être directement fixé au conduit 1.

Une fois que le module de refroidissement 100 est obtenu par assemblage du conduit 1, du premier échangeur thermique 3, du deuxième échangeur thermique 4 et de l'organe de ventilation 5 entre eux, le module de refroidissement 100 est monté dans le véhicule, au niveau d'une face avant de celui-ci, via les organes de fixation 47 portés par le deuxième dissipateur thermique 4.

La description qui précède indique clairement que l'invention remplit les objectifs qu'elle s'est fixée, en proposant un module de refroidissement comportant un conduit d'amenée d'air configuré pour permettre directement la fixation d'au moins un échangeur thermique. Tel que cela a pu être précisé précédemment, une telle configuration permet de limiter le nombre de composants nécessaires pour réaliser le module de refroidissement, notamment en se passant d'un cadre sur lequel sont fixés les échangeurs thermiques et sur lequel est également rapporté le conduit. Un tel agencement est particulièrement avantageux dans le cas où le conduit comporte des éléments de fixation de chaque échangeur thermique présent dans le module de refroidissement. L'invention ne saurait toutefois se limiter aux moyens et configurations décrits et illustrés, et elle s'applique également à tous moyens ou configurations équivalents et à toute combinaison de tels moyens couverts par les revendications.

## Revendications

1. Module de refroidissement (100) de véhicule automobile, comprenant au moins un premier échangeur thermique (3, 4) et au moins un conduit (1) comportant une entrée d'air (10) du module de refroidissement (100), le conduit (1) étant configuré pour acheminer un air de refroidissement de l'entrée d'air (10) vers l'échangeur thermique (3,4), le conduit (1) comporte des éléments de fixation (24, 24', 25, 26, 27, 28, 29) configurés pour fixer le premier échangeur thermique (3, 4) au conduit (1), ledit conduit (1) comprenant une sortie d'air (12), s'étendant dans un plan parallèle à un plan d'extension (150) du module de refroidissement, et une paroi de recouvrement (2) bordant la sortie d'air (12) et défini par une pluralité de pans (20a, 20b, 20c, 20d) s'étendant perpendiculairement au plan d'extension (150) du module de refroidissement, et **caractérisé en ce que** des premiers éléments de fixation (26, 27, 28, 29) sont disposés en saillie d'une face interne (11) du conduit (1) de manière à loger le premier échange thermique (3) dans un logement (210) défini au moins en partie par la paroi de recouvrement (2) du conduit (1).

2. Module de refroidissement (100) selon la revendication précédente, comprenant deux échangeurs thermiques (3, 4) et dans lequel le conduit (1) comporte les premiers éléments de fixation (26, 27, 28, 29) configurés pour fixer le premier échangeur thermique (3) au conduit (1) et des deuxièmes éléments de fixation (24, 24', 25) configurés pour fixer un deuxième échangeur thermique (4) au conduit (1).

3. Module de refroidissement (100) selon la revendication 1 ou 2, dans lequel la paroi de recouvrement (2) comprend au moins deux pans latéraux opposés (20b, 20d) agencés de part et d'autre de la sortie d'air (12), des premiers éléments de fixation (26, 27, 28, 29) étant répartis sur le premier pan latéral (20b) et sur le deuxième pan latéral (20d).

4. Module de refroidissement (100) selon l'une des revendications précédentes, dans lequel la paroi de recouvrement (2) est configurée pour recouvrir longitudinalement chaque bord (30a, 30b, 30c, 30d) du premier échangeur thermique (3, 4).

5. Module de refroidissement (100) selon l'une des revendications précédentes, dans lequel les deuxièmes éléments de fixation (24, 24', 25) sont disposés en saillie d'une face externe (13) du conduit (1) de manière à disposer le deuxième échange thermique (4) en regard du premier échangeur thermique (3), à l'extérieur dudit logement (210).

6. Module de refroidissement (100) selon l'une des revendications précédentes, dans lequel le deuxième échangeur thermique (4) comprend des organes de fixation (47) configurés pour fixer le module de refroidissement (100) au véhicule automobile.

7. Module de refroidissement (100) selon l'une des revendications précédentes, comprenant un organe de ventilation (5) configuré pour forcer l'entrée de l'air de refroidissement dans le module de refroidissement, l'organe de ventilation (5) étant rendu solidaire du conduit (1) et/ ou de l'au moins un échangeur thermique.

8. Module de refroidissement (100) selon l'une quelconque des revendications précédentes, dans lequel les éléments de fixation (24, 24', 25, 26, 27, 28, 29) sont venus de matière avec le conduit (1).

## Patentansprüche

1. Kühlmodul (100) für ein Kraftfahrzeug, mit mindestens einem ersten Wärmetauscher (3, 4) und mindestens einem Kanal (1) mit einem Lufteinlass (10) des Kühlmoduls (100), wobei der Kanal (1) dazu ausgelegt ist, Kühlluft vom Lufteinlass (10) zum Wärmetauscher (3, 4) zu leiten, wobei der Kanal (1) Befestigungselemente (24, 24', 25, 26, 27, 28, 29) umfasst, die dazu konfiguriert sind, den ersten Wärmetauscher (3, 4) an dem Kanal (1) zu befestigen, wobei der Kanal (1) einen Luftauslass (12) umfasst, der sich in einer Ebene parallel zu einer Erstreckungsebene (150) des Kühlmoduls erstreckt, und eine Abdeckwand (2), die den Luftauslass (12) begrenzt und durch mehrere Platten (20a, 20b, 20c, 20d) definiert ist die sich senkrecht zur Erstreckungsebene (150) des Kühlmoduls erstrecken, und **dadurch gekennzeichnet, dass** die ersten Befestigungselemente (26, 27, 28, 29) von einer Innenfläche (11) des Kanals (1) vorstehen, um den ersten Wärmetauscher (3) in einem Gehäuse (210) aufzunehmen, das zumindest teilweise durch die Abdeckwand (2) des Kanals (1) definiert ist.

2. Kühlmodul (100) nach dem vorhergehenden Anspruch, das zwei Wärmetauscher (3, 4) umfasst und bei dem der Kanal (1) umfasst die erste Befestigungselemente (26, 27, 28, 29), die so konfiguriert sind, dass sie den ersten Wärmetauscher (3) an der Kanal (1) zu befestigen, und zweite Befestigungselemente (24, 24', 25), die so konfiguriert sind, dass sie einen zweiten Wärmetauscher (4) an der Kanal (1).

3. Kühlmodul (100) nach Anspruch 1 oder 2, wobei die Deckwand (2) mindestens zwei gegenüberliegende Seitenflächen (20b, 20d) umfasst, die auf beiden Seiten des Luftauslasses (12) angeordnet sind, wobei erste Befestigungselemente (26, 27, 28, 29) auf der ersten Seitenfläche (20b) und auf der zweiten Seitenfläche (20d) verteilt sind.

4. Kühlmodul (100) nach einem der vorhergehenden Ansprüche, wobei die Abdeckwand (2) so konfiguriert ist, dass sie jede Kante (30a, 30b, 30c, 30d) des ersten Wärmetauschers (3, 4) in Längsrichtung abdeckt.

5. Kühlmodul (100) nach einem der vorhergehenden Ansprüche, wobei die zweiten Befestigungselemente (24, 24', 25) angeordnet sind in von einer Außenseite (13) der Kanal(1) vorsteht, so dass der zweite Wärmetauscher (4) gegenüber dem ersten Wärmetauscher (3) außerhalb der genannten Wohnung (210) angeordnet ist.

6. Kühlmodul (100) nach einem der vorhergehenden Ansprüche, wobei der zweite Wärmetauscher (4) Befestigungselemente (47) umfasst, die so konfiguriert sind, dass sie das Kühlmodul (100) am Kraftfahrzeug befestigen.

7. Kühlmodul (100) nach einem der vorhergehenden Ansprüche, mit einem Belüftungsorgan (5), das so konfiguriert ist, dass es den Eintritt von Kühlluft in das Kühlmodul erzwingt, wobei das Belüftungsorgan (5) fest mit dem Kanal (1) und/oder dem mindestens einen Wärmetauscher verbunden ist.

8. Kühlmodul (100) nach einem der vorstehenden Ansprüche, wobei die Befestigungselemente (24, 24', 25, 26, 27, 28, 29) einstückig mit dem Kanal (1) ausgebildet sind.

## Claims

1. Cooling module (100) for a motor vehicle, comprising at least first heat exchanger (3, 4) and at least one duct (1) comprising an air inlet (10) of the cooling module (100), the duct (1) being configured to convey cooling air from the air inlet (10) to the heat exchanger (3, 4), the duct (1) comprises fixing elements (24, 24', 25, 26, 27, 28, 29) configured to fix the first heat exchanger (3, 4) to the duct (1), said duct (1) comprising an air outlet (12), extending in a plane parallel to a plane of extension (150) of the cooling module, and a cover wall (2) bordering the air outlet (12) and defined by a plurality of panels (20a, 20b, 20c, 20d) extending perpendicularly to the plane of extension (150) of the cooling module, and **characterised in that** the first fastening elements (26, 27, 28, 29) project from an internal face (11) of the duct (1) so as to house the first heat exchanger (3) in a housing (210) defined at least in part by the covering wall (2) of the duct (1).

2. Cooling module (100) according to the preceding claim, comprising two heat exchangers (3, 4) and in which the duct (1) comprises first fastening elements (26, 27, 28, 29) designed to fasten the first heat exchanger (3) to the duct (1) and second fastening elements (24, 24', 25) designed to fasten the second heat exchanger (4) to the duct (1).

3. Cooling module (100) according to claim 1 or 2, in which the cover wall (2) comprises at least two opposite side panels (20b, 20d) arranged on either side of the air outlet (12), first fixing elements (26, 27, 28, 29) being distributed over the first side panel (20b) and over the second side panel (20d).

4. Cooling module (100) according to one of the preceding claims, wherein the cover wall (2) is configured to longitudinally cover each edge (30a, 30b, 30c, 30d) of the first heat exchanger (3, 4).

5. Cooling module (100) according to one of the preceding claims, in which the second fastening elements (24, 24', 25) are arranged in projects from an external face (13) of the duct (1) so as to position the second heat exchanger (4) opposite the first heat exchanger (3), outside said housing (210).

6. Cooling module (100) according to one of the preceding claims, wherein the second heat exchanger (4) comprises fixing members (47) configured to fix the cooling module (100) to the motor vehicle.

7. Cooling module (100) according to one of the preceding claims, comprising a ventilation member (5) configured to force cooling air into the cooling module, the ventilation member (5) being integral with the duct (1) and/or with at least one heat exchanger.

8. Cooling module (100) according to any of the preceding claims, in which the fastening elements (24, 24', 25, 26, 27, 28, 29) are integral with the conduit (1).
